# EUROPÄISCHE PATENTSCHRIFT

(11) **EP 2 947 123 B1**
(45) Veröffentlichungstag und Bekanntmachung des Hinweises auf die Patenterteilung: **02.08.2017**
(21) Anmeldenummer: 15165837.4
(22) Anmeldetag: 30.04.2015
(51) Int. Cl.: C09D 5/00

(54) **VERGUSSMASSE MIT KORROSIONSINHIBITOR FÜR ELEKTRONISCHE BAUELEMENTE, SOWIE ELEKTRONISCHES BAUELEMENT UND GETRIEBE MIT EINER SOLCHEN**
MOULDABLE MATERIAL WITH CORROSION INHIBITOR FOR ELECTRONIC COMPONENTS, AND ELECTRONIC COMPONENT AND GEARBOX WITH SAME
MASSE DE SCELLEMENT COMPORTANT UN INHIBITEUR DE CORROSION POUR ÉLÉMENTS DE CONSTRUCTION ÉLECTRONIQUES ET ÉLÉMENT DE CONSTRUCTION ÉLECTRONIQUE ET ENGRENAGE EN ÉTANT DOTÉ

(30) Priorität: 19.05.2014 DE 102014209445
(43) Veröffentlichungstag der Anmeldung: 25.11.2015
(73) Patentinhaber: Volkswagen AG, 38440 Wolfsburg (DE)
(72) Erfinder: Lotz, Alexander, 38464 Papenrode (DE); Seuring, Jan, 51065 Köln (DE)
(74) Vertreter: Gulde & Partner

(56) Entgegenhaltungen:
- EP-A1- 1 524 332
- WO-A1-2010/104516
- WO-A1-2014/172004
- JP-A- 2003 105 554
- JP-A- 2005 206 947
- JP-A- 2009 215 477

## Beschreibung

Die Erfindung betrifft eine Vergussmasse zur Beschichtung, Abdichtung und/oder zum Verbinden elektronischer Bauelemente, umfassend ein Matrixpolymer sowie einen Inhibitor, der eine Korrosion der Bauelemente durch Schwefel und seine Verbindungen hemmt. Ferner betrifft die Erfindung ein elektronisches Bauelement sowie ein Getriebe jeweils aufweisend eine solche Vergussmasse.

Elektronische Bauelemente, wie Steuergeräte, werden zum Schutz vor mechanischer Einwirkung häufig in Vergussmassen eingebettet. Bekannte Vergussmassen sind häufig auf Basis von Elastomeren, insbesondere Silikonen hergestellt. Diese Vergussmassen können das Elektronikbauteil zudem in begrenztem Maße auch vor der schädlichen Einwirkung von Flüssigkeiten schützen. Jedoch erlauben bekannte Vergussmassen eine Diffusion von Gasen. Insbesondere schwefelhaltige Gase wie CS₂, COS, H₂S, Thiole, Thioether und einige Polysulfide sind beispielsweise in der Lage, in Silikonen zu diffundieren, und können bei Kontakt mit metallischen Komponenten der elektronischen Bauelemente korrodierend auf diese wirken. Besonders von der Korrosion durch schwefelhaltige Gase betroffen sind Kupfer, Silber sowie deren Legierungen.

In Getriebeanwendungen, beispielsweise in Kraftfahrzeugen, werden häufig Getriebeöle als Schmierstoff eingesetzt, welche reaktive und gasförmige Schwefelkomponenten freisetzen können. Getriebesteuergeräte sind häufig als integrierte bzw. Anbausteuergeräte ausgeführt und somit in einem Bereich angeordnet, in welchem sie mit dem Getriebeöl in Kontakt kommen können. Ist das Getriebeöl wiederum mit dem Steuergerät bzw. mit einer das Steuergerät umgebenden Vergussmasse in Kontakt, so können Schwefelkomponenten auf die Oberfläche des Steuergeräts gelangen und dort Korrosion an metallischen Komponenten verursachen.

Um Korrosion zu reduzieren, sind Getriebeölen häufig sogenannte Korrosionsinhibitoren beigemischt, welche insbesondere Buntmetalle und Silber vor einer chemischen Reaktion mit Schwefel aus dem Getriebeöl schützen. Eine Gruppe von Korrosionsinhibitoren koordiniert beispielsweise die Metallatome der Oberfläche der metallischen Komponente und deaktiviert sie somit für eine Reaktion mit Schwefel. Nachteilig ist jedoch, dass aufgrund geringer Volatilität solche Korrosionsinhibitoren, im Gegensatz zu korrosiven Schwefelverbindungen, nicht an die zu schützenden Oberflächen gelangen.

Ein weiterer Ansatz ist in EP 1295905 B1 und US 20090043029 A1 beschrieben, wobei der Vergussmasse Metallpartikel beigemischt werden. Diese sollen als Opfermaterial wirken und die durch die Vergussmasse diffundierenden Schwefelmoleküle abfangen.

WO 2014/172004 A1 offenbart hierzu eine Vergussmasse umfassend ein Matrixpolymer, wie beispielsweise ein Epoxidharz, und einen Korrosionsinhibitor.

In WO 2010/104516 A1 ist eine Flüssigkeit zur Beschichtung mechanischer Bauelemente beschrieben, umfassend ein Matrixpolymer (polymerisiertes Terpentin) sowie einen Inhibitor, der eine Korrosion der Bauelemente durch Schwefel und seine Verbindungen hemmt. Der Inhibitor ist eine organische Verbindung auf der Basis von α- oder β-Terpinol, β-Pinen oder p-Cymen.

JP 2009 215 477 A beschreibt eine Vergussmasse für stromführende metallische Bauteile aus Polyurethan welche einen Korrosionsinhibitor, zum Beispiel ein Thiadiazolderivat, enthält. Der Korrosionsinhibitor dient dem Unschädlichmachen von Schwefelverbindungen, wie Schwefelwasserstoff, Schwefelsäuregas und anderen.

Die auf Kansai Paint Co Ltd zurückgehenden JP 2005 206 947 A, JP 2003 105 554 A und EP 1 524 332 A1 beschreiben eine Vergussmasse zur Beschichtung von verzinkten Stahlelementen, umfassend ein Matrixpolymer auf Basis eines Epoxidharzes, eine reaktive Komponente sowie ein chromfreies Antirost-Additiv, welches eine Korrosion der Stahlelemente hemmt. Dabei werden korrodierte Metallionen durch Bindung an die Epoxidmatrix und das Additiv gebunden.

In WO 9967029 A1 ist zudem beschrieben, in einem separaten Verfahrensschritt eine den Korrosionsinhibitor umfassende Schicht auf die Oberfläche des Elektronikbauteils aufzubringen, bevor eine Schicht aufgetragen wird, welche für korrodierende Substanzen durchlässig ist.

In DE 10322507 A1 ist ferner beschrieben, ein Salz eines filmbildenden Korrosionsinhibitors einem Polymer beizumischen, welches bei Kontakt mit einem protischen Lösungsmittel innerhalb des Polymers diffundieren kann.

Der Erfindung liegt nun die Aufgabe zugrunde, eine Vergussmasse bereitzustellen, welche im Vergleich zum Stand der Technik einen erhöhten Korrosionsschutz für elektronische Bauelemente, sicherstellt, insbesondere dann, wenn Bauelement und/oder Vergussmasse mit schwefelhaltigen Ölen bzw. Gasen in Kontakt sind.

Diese Aufgabe ist durch eine Vergussmasse zur Beschichtung, Abdichtung und/oder zum Verbinden elektronischer Bauelemente mit den Merkmalen des ersten unabhängigen Anspruchs gelöst. Somit betrifft ein Teil der Erfindung eine Vergussmasse zur Beschichtung, Abdichtung und/oder zum Verbinden elektronischer Bauelemente, welche ein Matrixpolymer sowie einen Inhibitor umfasst. Der Inhibitor hemmt eine Schwefelkorrosion der Bauelemente durch Schwefel und seine Verbindungen. Erfindungsgemäß ist der Inhibitor eine organische Verbindung, die korrosionsaktiven Schwefel und/oder Schwefelverbindungen durch Einbau derselben in die Molekülstruktur des Inhibitors bindet und ist mindestens eine aus folgender Gruppe ausgewählte Verbindung:
- eine Verbindung der allgemeinen chemischen Formel R₁-Sₙ-R₂
- eine α,β-ungesättigte Carbonylverbindung der allgemeinen chemischen Formel (Rₐ-)(R_{b}-)C=C(-R_{c})-C(=O)(-R_{d}), wobei zumindest einer der Reste R_{a-d} ein Rest R₂ ist,
- eine α-halogenierte Carbonylverbindung der allgemeinen chemischen Formel R₂-C(=O)C(-Rₐ)(-R_{b})-(-X) und/oder
- eine Verbindung der allgemeinen chemischen Formel (R₂-)(R_{c}-)(R_{d}-)C-N(-Rₑ)(-R_{f}).

In den allgemeinen Formeln ist n eine natürliche Zahl im Bereich von 1 bis 10. X ist ein Halogen. R₁ und R_{a-f} sind unabhängig voneinander ein Wasserstoffatom, eine kovalente Bindung zu dem Matrixpolymer oder eine lineare oder cyclische, verzweigte oder unverzweigte, aromatische oder aliphatische organische Gruppe umfassend 1 bis 25 Kohlenstoffatome. R₂ ist ein Oligomer mit 3 bis 10 Wiederholeinheiten oder ein Polymer, wobei das Oligomer oder Polymer der gleichen Kunststoffklasse wie das Matrixpolymer angehört oder gleiche Wiederholungseinheiten wie dieses aufweist.

Der erfindungsgemäße Inhibitor bindet Schwefel und seine Verbindungen, insbesondere Schwefelwasserstoff (H₂S), Kohlenstoffdisulfid (CS₂), Carbonylsulfid (COS), Thiole, Thioether oder Polysulfide, also elementaren und/oder molekularen Schwefel, in die eigene Molekülstruktur ein. Der somit fixierte Schwefel wird aus dem Reaktionssystem zwischen Materialien der Oberfläche, wie Buntmetalle, insbesondere Silber und Kupfer, des elektronischen Bauelements und dessen Umgebung entfernt und wirkt nicht mehr korrodierend. Im Vergleich zu blockierend wirkenden Inhibitoren, beispielsweise Filmbildnern, wird bei erfindungsgemäßem Inhibitor mit der Einbindung des Schwefels in die Molekülstruktur des Inhibitors der Reaktant für die das Bauelement zersetzende Reaktion entzogen. Dabei ist es unerheblich, ob die erfindungsgemäßen Inhibitoren an der Oberfläche des Bauelements angeordnet sind. Somit liegt der Inhibitor mit der Vergussmasse vermischt vor. Ferner ist es bevorzugt, aber nicht zwingend, eine Diffusion des Inhibitors innerhalb der Vergussmasse sicherzustellen.

Ein Inhibitor ist ein Hemmstoff, also eine Substanz, die eine oder mehrere Reaktionen - chemischer, biologischer oder physikalischer Natur- so beeinflusst, dass diese verlangsamt, gehemmt oder verhindert werden.

In bevorzugter Ausgestaltung der Erfindung ist vorgesehen, dass der Inhibitor ausgebildet ist, Schwefel und/oder Schwefelverbindungen in die Molekülstruktur des Inhibitors durch Kettenverlängerungsreaktionen, Additionsreaktionen und/oder Substitutionsreaktionen einzubauen. Vorteilhafterweise werden durch derartige Reaktionen feste, insbesondere kovalente, chemische Bindungen zwischen Schwefel und dem Inhibitor erzeugt. Diese Reaktionen zeichnen sich dadurch aus, dass sie bei Betriebsbedingungen der Bauelemente nicht reversibel sind. Der Schwefel wird somit nicht wieder freigesetzt.

Vorliegend wird unter chemischen Resten R₁, R₂, R_{a-f} (weiterhin auch als chemische Gruppe R bezeichnet) unabhängig voneinander ein Wasserstoffatom, eine kovalente Bindung zum Matrixpolymer oder eine organische Gruppe verstanden, welche bis zu 25 Kohlenstoffatome umfasst. Diese sind linear oder cyclisch angeordnet und bilden dabei aliphatische und/oder aromatische Gruppen. Darüber hinaus liegen sie verzweigt oder unverzweigt vor und sind können substituiert sein. Die organische Gruppe R weist neben Kohlenstoff- und Wasserstoffatomen vorzugsweise Atome anderer Elemente, insbesondere Heteroatome, auf.

Im folgenden werden der zu inhibierende Schwefel und/oder seine Verbindungen durch die allgemeine Formel R₃-S-R₃' beschrieben. Hierbei bedeuten R₃ und R₃' unabhängig voneinander eine an Schwefel gebundene anorganische oder organische Gruppe (z. B. =C=O), ein Wasserstoffatom oder zumindest ein Elektronenpaar, wobei die Gruppen R₃ und R₃' cyclisch miteinander verbunden sein können.

Mit besonderem Vorteil wird der Inhibitor durch die allgemeine chemische Formel R₁-Sₙ-R₂ beschrieben, wobei R₁ vorzugsweise eine substituierte oder unsubstituierte 5- bis 7-gliedrige hetero-aromatische Gruppe oder eine Carbamatgruppe und n eine natürliche Zahl, insbesondere im Bereich von 1 bis 10, ist. Derartige Verbindungen sind ausgebildet, durch die Ausbildung von S-S-Bindungen Schwefelatome in die S-R₂-Bindung und/oder eine S-S-Bindung einzubauen. Der zugrundeliegende Mechanismus entspricht einer S-S-Kettenverlängerungsreaktion und kann beispielsweise für korrosive Schwefelverbindungen, die Schwefel in der Oxidationsstufe 0 enthalten, wie in (1) dargestellt beschrieben werden:

R₁-**Sₙ**-R₂ + R₃-**S**-R₃' → R₁-**Sₙ₊₁-** R₂ + R₃--R₃' (1)

Die Gruppen R₃ und/oder R₃' werden im Zuge der Reaktion optional unter Bindung eines Wasserstoffatoms abgespalten.

Der besondere Vorteil von Verbindungen der Formel R₁-**Sₙ**-R₂ liegt darin, dass der Inhibitor nach dem Einbau des Schwefels nicht deaktiviert ist. Vielmehr werden durch den Einbau weitere S-S-Bindungen geschaffen, in welche über denselben Mechanismus weitere Schwefelatome in den Inhibitor einbaubar sind.

In besonders bevorzugter Ausgestaltung der Erfindung ist vorgesehen, dass der Rest R₁ eine substituierte oder unsubstituierte Thiadiazolgruppe ist. Insbesondere ist die Verbindung R₁-**Sₙ**-R₂ 2,5-Bis(octyldithio)-1,3,4,-thiadiazol. Letzteres verfügt über zwei -S-S-(CH₂)₇-CH₃Gruppen (mit n = 2 und R₂ = (CH₂)₇-CH₃) und ist somit im Vergleich zu schwefelbindenden Inhibitoren mit nur einem Angriffspunkt für S-S-Kettenverlängerungen, doppelt effektiv

In alternativer Ausgestaltung der Erfindung ist vorgesehen, dass der Inhibitor eine α,β-ungesättigte Carbonylverbindung der allgemeinen Form **(Rₐ-)(R_{b}-)C=C**(-R_{c})-C(=O)(-R_{d}) ist, wobei zumindest einer der Reste Rₐ, R_{b}, R_{c}, R_{d} (nachfolgend auch R_{a-d})der Rest R₂ ist. Derartige Verbindungen sind befähigt, Schwefel im Zuge einer Additionsreaktion, beispielsweise einer Michael-Addition, durch Aufspaltung der Doppelbindung in die Molekülstruktur einzubauen. Zum Einbau in die Molekülstruktur des Inhibitors geeignet sind symmetrische oder unsymmetrische, mindestens zweiatomige Schwefelverbindungen der Form R₃-S-R₃', insbesondere der Form R₃-S-H . Der Einbau des Schwefels kann beispielsweise durch (2) beschrieben werden:

**(Rₐ-)(R_{b}-)C =C**(-R_{c})-C(=O)(-R_{d}) + R₃-S-R₃' → **R₃-S-C(-Rₐ)(-R_{b})CR₃**(-R_{c})-C(=O)(-R_{d}) (2)

wobei die chemischen Gruppen Rₐ, R_{b} und R_{c}, R_{d} in besonderer Ausgestaltung cyclisch miteinander verbunden sind. In bevorzugten Ausführungen ist mindestens einer der Reste R_{a-d} ein Wasserstoffatom.

In weiter bevorzugter Ausgestaltung der Erfindung ist vorgesehen, dass der Inhibitor eine α-halogenierte Carbonylverbindung, ein Imin, ein Kondensat aus einem Aldehyd und einem Amin oder ein Hexahydro-1,3,5-Triazin-Derivat, der allgemeinen Form (R₂-)(Rₐ-)(-R_{b}) **C(-R_{Abgang})** ist, wobei die Abgangsgruppe R_{Abgang} eine Verbindung der Form N(Rₐ)(-R_{b}) oder ein Halogen X ist. Diese Verbindungen stellen vorteilhafterweise Reaktionspartner für Substitutionsreaktion mit Schwefelverbindungen, insbesondere für Schwefelwasserstoff (H₂S) und Thiole, sowie deren Tautomere dar. In der Chemie bezeichnet die Substitution eine chemische Reaktion, bei der Atome oder Atomgruppen in einem Molekül durch ein anderes Atom oder eine andere funktionelle Gruppe (oder auch Substituent) ersetzt werden.

Die angreifende schwefelhaltige Verbindung, R₃-S-R₃' verdrängt die zu ersetzende Gruppe (oder Abgangsgruppe R_{Abgang}) aus der Verbindung des Inhibitors. Dies erfolgt zum einen dadurch, dass sich die angreifende schwefelhaltige Verbindung R₃-S-R₃' dem Bindungspartner der zu ersetzenden Gruppe R_{Abgang} sukzessiv nähert (und die neue Bindung bildet), wobei gleichzeitig die Bindung der verdrängten Gruppe R_{Abgang} zunehmend geschwächt wird. Bei diesem Reaktionstyp sind immer zwei Moleküle gleichzeitig beteiligt. In vorliegender Ausgestaltung ergibt sich im Wesentlichen das in (3) gezeigte Reaktionsschema.

R₂-(Rₐ)(R_{b})**-C-R_{Abgang}** + **S**-R₃ → R₂-(Rₐ)(R_{b})**-C-S**-R₃ + R_{Abgang} (3)

Die in (3) dargestellte Einheit -(Ra)(Rb)-C kann als R1 bezeichnet werden.

Da im entscheidenden (geschwindigkeitsbestimmenden) Schritt zwei Moleküle beteiligt sind, spricht man von einer *bimolekularen* Substitution. Alternativ verlässt die Abgangsgruppe R_{Abgang}, ggf. unterstützt durch ein Hilfsreagenz, den Molekülverband und hinterlässt im Molekül eine Lücke, die schnell von der angreifenden Gruppe R₃-S-R₃' besetzt wird. Der geschwindigkeitsbestimmende Schritt ist hier der Zerfall der Ausgangsverbindung. Bei der Verwendung der in dieser Ausgestaltung genannten Inhibitoren ist die Abgangsgruppe vorzugsweise ein Amin.

Die Position des Rests R₂ im Molekül ist in den oben beschriebenen Ausgestaltungen jeweils angegeben, andernfalls entspricht zumindest eine der Gruppen R_{a-d} dem Rest R₂.

Der Inhibitor weist die chemische Gruppe R₂ auf, der wie in den einzelnen Ausführungen angegeben im Inhibitormolekül positioniert ist. Weist das Inhibitormolekül in den genannten Ausführungsformen keinen Rest R₂ auf, so entspricht zumindest eine der chemischen Gruppen R_{a-d} der Gruppe R₂. Die Gruppe R₂ beeinflusst unter anderem die physikalischen Eigenschaften des Inhibitors. Dazu zählt beispielsweise die Mischbarkeit des Inhibitors mit der Vergussmasse. Stellt R₂ beispielsweise eine kovalente Bindung zum Matrixpolymer der Vergussmasse dar, so ist der Inhibitor mit dem Matrixpolymer besonders gut mischbar und liegt somit gleichmäßig in der Vergussmasse vor.

Besonders bevorzugt weist der Inhibitor mehr als einen Rest R₂ auf, wobei die Reste R₂ sternförmig und/oder in Form von Dendrimeren an einer Hauptgruppe R₁ angeordnet sind. Die Hauptgruppe R₁ stellt dabei diejenige organische Einheit des Inhibitors dar, welche mit der zur Schwefelbindung befähigten Gruppe verbunden ist.

Erfindungsgemäß ist die verzweigte oder unverzweigte Gruppe des Rests R₂ ein Oligomer mit 3 bis 10 Wiederholeinheiten oder ein Polymer. Mit anderen Worten weist der Inhibitor einen Rest R₂ in Form eines verzweigten oder unverzweigten Oligomers oder Polymers auf. Dabei kann es sich vorzugsweise um ein Copolymer bzw. Cooligomer oder ein Homopolymer bzw. Homooligomer handeln. In dieser Ausgestaltung ist der Rest R₂ bevorzugt als lipophile Gruppe ausgebildet. Dies bietet den Vorteil, dass die Mischbarkeit zwischen Inhibitor und Matrixpolymer im Vergleich zu insbesondere kurzen aliphatischen Ketten erhöht wird.

Der Rest R₂ weist ähnliche Polaritäten wie das Matrixpolymer auf, wie es der Fall ist, wenn die Monomereinheiten des Matrixpolymers und Monomereinheiten des Rests R₂ bei einer Polymerisation Kunststoffe der gleichen Kunststoffklasse bilden. Somit umfasst der Rest R₂ gleiche oder ähnliche Monomer-einheiten wie das Matrixpolymer.

Kunststoffe sind aus sich wiederholenden Bausteinen, den Wiederholeinheiten zusammengesetzt, welche sich aus den eingesetzten Monomeren ableiten. Durch den "chemischen Bauplan" der Monomere ergibt sich, wie sie miteinander reagieren können, und welche Stoffe daraus entstehen. Daher können die Kunststoffe nach den Monomeren oder den entstandenen Verbindungen in Klassen eingeteilt werden. In einer Kunststoffklasse sind Kunststoffe mit besonderen chemischen und/oder physikalischen Eigenschaften zusammengefasst. Beispiele für Kunststoffklassen sind Duromere, Elastomere und Thermoplasten. Gehören das Matrixpolymer und der Rest R₂ der gleichen Kunststoffklasse an, so erhöht sich die chemische Ähnlichkeit, was wiederum die Mischbarkeit und/oder die Diffusionsfähigkeit des Inhibitors in der Vergussmasse erhöht.

Die erfindungsgemäße Vergussmasse umfasst ein Matrixpolymer und den schwefelbindenden Inhibitor. Das Matrixpolymer stellt hierbei bevorzugt die Basis der Vergussmasse dar. Das heißt, es bildet zumindest 60 Gew.-%, insbesondere zumindest 80 Gew.-%, vorzugsweise zumindest 85 Gew.-% der Vergussmasse. Der erfindungsgemäße Inhibitor in einer der oben beschriebenen Ausgestaltungen ist zu einem Anteil im Bereich von 0,05 bis 20 Gew.-%, insbesondere im Bereich von 0,5 bis 15 Gew.-%, bevorzugt 1 bis 10 Gew.-% beigemischt.

Das Matrixpolymer ist in bevorzugter Ausgestaltung der Erfindung ein Duromer, ein Elastomer, ein thermoplastisches Elastomer oder eine Mischung von diesen. Diese Substanzen eignen sich besonders gut als Massen, die zur Abdeckung, mechanischen Verstärkung und zum Schutz von Halbleitern und Baugruppen verwendet werden, um Hohlräume zu verfüllen und Komponenten vor Chemikalien, Feuchtigkeit, mechanischer Beanspruchung und Vibrationen zu schützen. Als deren Vertreter werden vorzugsweise Silikone, Polyurethane, Epoxidharze und/oder Polyacrylate als Matrixpolymer eingesetzt. Die Gruppe der Duromere, wie Epoxidharz eignet sich insbesondere für hochbelastbare statische Anwendungen.

In besonders bevorzugter Ausgestaltung der Erfindung ist vorgesehen, dass die Vergussmasse weitere schwefelbindende und/oder filmbildende Verbindungen aufweist. Schwefelbindende Inhibitoren wirken analog zu den oben beschriebenen Ausgestaltungen des erfindungsgemäßen Inhibitors durch chemische oder physikalische Bindung des Schwefels und/oder der Schwefelverbindungen. Filmbildende Inhibitoren sind organische Verbindungen, welche sich auf der Oberfläche des Bauelements ablagern und durch Adsorption an dem Oberflächenmaterial

(z. B. Kupfer und/oder Silber) einen chemischen Angriff durch oxidierende Substanzen blockieren.

Bevorzugte Beispiele für Korrosionsinhibitoren, die der erfindungsgemäßen Vergussmasse als Additive zugesetzt werden sind: Triazol-, eine Benzotriazol-, eine Toluyltriazol-, eine Thiazol-, eine Thiocarbamat-, eine Imidazolin-, eine Imidazol-, eine Pyradin-, eine Quinolin-, eine Morpholin-, eine Triazin-, eine Glyoxal-, eine Ethanolamin-, eine Methyldiethanolamin-, Eisensalze der α-Hydroxysäure, insbesondere Eisengluconat-, eine Imin-, eine Dithiophosphat-, eine Dithiocarbamat- und/oder eine Tannin-Verbindung. Mit besonderem Vorteil weisen diese Verbindungen einen Rest R₂ gemäß oben beschriebenen Definitionen auf.

Die Compoundierung, also das Vermischen von Matrixpolymer und dem Inhibitor bzw. den Inhibitoren findet bevorzugt vor dem Aushärten der Vergussmasse statt. Die Anbindung des Rests R₂ an den Inhibitor und/oder die Inhibitoren erfolgt entweder vor der Compoundierung oder im Zuge der Aushärtung der Vergussmasse.

Ein weiterer Aspekt der Erfindung betrifft ein elektronisches Bauelement umfassend eine erfindungsgemäße Vergussmasse. Eine Anordnung der erfindungsgemäßen Vergussmasse ermöglicht es vorteilhafterweise, das Bauelement als integriertes Bauelement in einer für das Bauelement schädlichen Umgebung anzuordnen. Somit können beispielsweise mit der erfindungsgemäßen Vergussmasse ausgestattete Steuergeräte als Anbausteuergeräte in einer Schwefelatmosphäre angeordnet werden.

Das Bauelement ist insbesondere eine Getriebesteuerung zur Steuerung eines Getriebes eines Kraftfahrzeugs, welche eine erfindungsgemäße Vergussmasse umfasst. Bei der Getriebesteuerung handelt es sich insbesondere um eine integrierte Getriebesteuerung.

Ein weiterer Aspekt der Erfindung ist ein Getriebe, welches eine solche mit einer erfindungsgemäßen Vergussmasse ausgestattete Getriebesteuerung aufweist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Skizze einer erfindungsgemäßen Getriebesteuerung in einer bevorzugten Ausführungsform,
- Figur 2: die chemische Struktur des Grundgerüsts des Inhibitors in bevorzugten Ausführungen,
- Figur 3: einen möglichen Mechanismus der Wirkweise eines schwefelbindenden Inhibitors in einer bevorzugten Ausgestaltung der Erfindung, und
- Figur 4: einen möglichen Mechanismus der Wirkweise eines filmbildenden Inhibitors nach dem Stand der Technik.

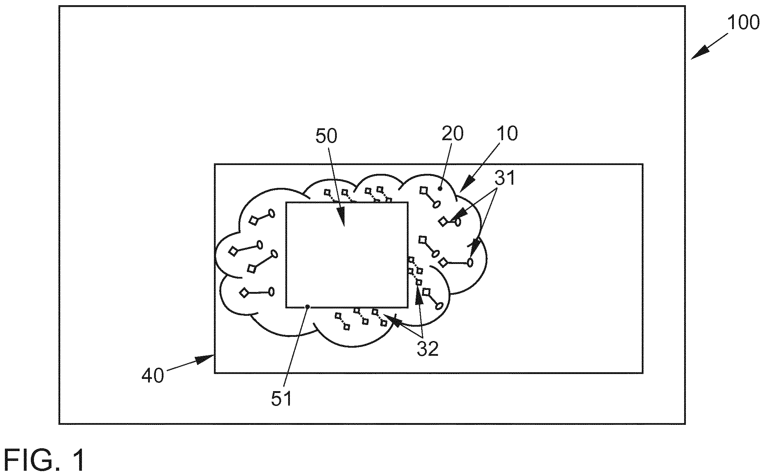

Figur 1 zeigt ein mit 100 bezeichnetes schematisch dargestelltes Kraftfahrzeug, in welchem ein Getriebe 40 und ein als Getriebesteuerung 50 ausgeführtes elektronisches Bauelement angeordnet sind.

Das Getriebe 40 ist üblicherweise mit Schmiermitteln geschmiert. Die verwendeten Schmiermittel (z. B. Getriebeöl) können Schwefel und/oder Schwefelverbindungen wie beispielsweise CS₂, COS, H₂S, Thiole und Polysulfide aufweisen oder bilden. Zur Steuerung des Getriebes 40 ist eine Getriebesteuerung 50 in das Getriebe integriert oder in unmittelbarer Nähe zu diesem angeordnet. Eine Oberfläche 51 der Getriebesteuerung 50 ist mit einer erfindungsgemäßen Vergussmasse 10 beschichtet, welche ein Matrixpolymer 20 sowie zumindest einen Inhibitor 31, 32 zur Hemmung von Schwefelkorrosion umfasst.

Die Vergussmasse 10 umschließt die Getriebesteuerung 50 in der gezeigten Darstellung vollflächig, das heißt, die gesamte Oberfläche 51 der Getriebesteuerung 50 ist mit der Vergussmasse 10 beschichtet. Die Vergussmasse 10 selbst umfasst das Matrixpolymer 20. Das Matrixpolymer 20 bildet die Grundstruktur der Vergussmasse 10 und liegt somit als Hauptkomponente in einem Bereich von 60 bis 99,5 Gew.% in der Vergussmasse 10 vor. Bei der Vergussmasse 10 handelt es sich bevorzugt um einen hydrophoben Kunststoff. Bevorzugt werden insbesondere Silikon (Polysiloxan), oder Epoxidharz, Polyacrylat oder Polyurethan als Matrixpolymer eingesetzt.

Die Vergussmasse 10 umfasst ferner zumindest einen Inhibitor 31, 32, der zumindest einen schwefelbindenden Inhibitor 31 gemäß der Erfindung umfasst. Dieser ist mit dem Matrixpolymer 20 mischbar und liegt nach der Polymerisation des Matrixpolymers gleichmäßig verteilt in der Vergussmasse 10 vor. Der schwefelbindende Inhibitor 31 kann chemisch an das Matrixpolymer 20 gebunden vorliegen oder innerhalb der Vergussmasse 10 frei oder nahezu frei diffundieren.

Die Vergussmasse 10 kann darüber hinaus weitere schwefelbindende Inhibitoren 31 und/oder filmbildende Inhibitoren 32 aufweisen. Die filmbildenden Inhibitoren 32 lagern sich, wie in Figur 1 angedeutet, bevorzugt an der Oberfläche 51 der Getriebesteuerung 50 an.

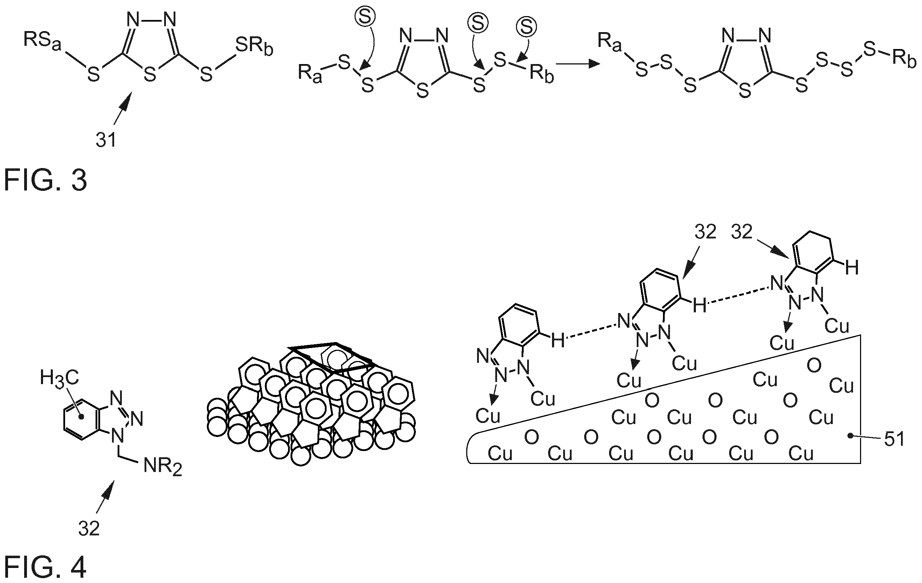

Die Funktion der in Figur 1 dargestellten Vergussmasse 10 liegt darin, die Oberfläche 51 der Getriebesteuerung 50 vor einer Korrosion mit Schwefel und/oder seinen Verbindungen zu schützen, die aus dem Schmiermittel durch die damit in Verbindung stehende Vergussmasse 10 diffundieren. Hierzu bauen die schwefelbindenden Inhibitoren 31 den Schwefel in die eigene Molekülstruktur ein. Dabei ist es unerheblich, ob die Inhibitoren 31 an der Oberfläche 51 direkt vorliegen, oder innerhalb des Volumens der Vergussmasse 10 fixiert sind. Der Schwefel, welcher mit einer Oberfläche der Vergussmasse 10 in Verbindung kommt und durch diese diffundiert, wird in die Struktur des Inhibitors 31 eingebaut, sobald die beiden Verbindungen aufeinander treffen. Ein möglicher Mechanismus ist in Figur 3 angegeben.

Die filmbildenden Inhibitoren 32 hingegen lagern sich an der Oberfläche 51 der Getriebesteuerung 50 an und bilden einen Film aus, welcher die Diffusion von Schwefel und seinen Verbindungen blockiert. Ein möglicher Mechanismus hierfür ist in Figur 4 angegeben.

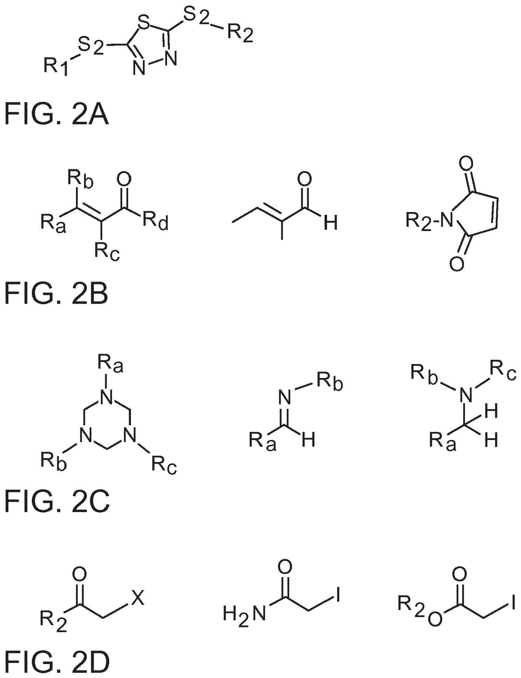

Figur 2 zeigt chemische Strukturformeln bevorzugter Inhibitoren 31, die schwefelbindend wirken. Hierbei ist jeweils der Teil der Struktur gezeigt, welcher den Inhibitor 31 befähigt, Schwefel in die Molekülstruktur einzubauen. In den gezeigten Strukturformeln steht R₂ für einen organischen Rest R₂, welcher ein Wasserstoffatom, eine verzweigte oder unverzweigte organische Gruppe oder eine kovalente Bindung zum Matrixpolymer sein kann. Der Rest R₂ ist insbesondere ein Oligomer mit 3 bis 10 Wiederholeinheiten oder ein Polymer. R₂ weist Monomereinheiten auf oder istaus Monomereinheiten aufgebaut, welche ebenfalls die Monomereinheiten des Matrixpolymers bilden oder zumindest der gleichen Kunststoffklasse angehören wie das Matrixpolymer.

R_{a-d} steht ebenfalls für verzweigte oder unverzweigte organische Gruppen oder Wasserstoff. Zudem stellt in den einzelnen Strukturformeln jeweils zumindest eine der Gruppen R_{a-d} den Rest R₂ dar.

Teildarstellung 2A zeigt die Strukturformel eines 2,5- Dihydrocarbyldithio-1,3,4-dithiazols. Die gezeigte Strukturformel ist eine Beispielverbindung für einen schwefelbindenden Inhibitor, welcher Schwefel über eine S-S-Kettenverlängerungsreaktion (Mechanismus siehe Figur 3) in die eigene Molekülstruktur einzubauen vermag. Als Derivate der gezeigten Verbindung können ebenso Thiazole oder Trithiazole verwendet werden, wobei die Heteroatome S und N des fünfgliedrigen Hetreoaromaten jeweils drei der fünf Positionen beliebig besetzen. Derartige Verbindungen sind jeweils an zumindest einem der Kohlenstoffatome innerhalb des fünfgliedrigen Rings durch eine R₂-Sₙ-Gruppe besetzt, wobei n eine natürliche Zahl zwischen 1 und 10 ist.

Teildarstellung 2B zeigt Strukturformeln für α,β-ungesättigte Carbonylverbindungen (von links nach rechs) in der allgemeinen Struktur (vgl. Gleichung (2)), sowie in bevorzugten Ausgestaltungen als Acrolein und als Maleimid.

α,β-ungesättigte Carbonylverbidnungen und ihre Derivate weisen zumindest eine C-C-Doppelbindung auf, welche im Zuge einer Additionsreaktion von einer symmetrischen oder unsymmetrischen Schwefelverbindung aufgebrochen werden kann. Dabei wird eine Bindung der betreffenden Schwefelverbindung getrennt und die beiden Teile der Schwefelverbindung binden anstelle der C-C-Doppelbindung an den Inhibitor.

Teildarstellung 2C zeigt chemische Strukturformeln von schwefelbindenden Inhibitoren, welche befähigt sind, Schwefel und seine Verbindungen im Zuge einer Substitutionsreaktion in die Molekülstruktur einzubauen. Dabei werden jeweils unter Abspaltung von Aminen C-N-Bindungen gebrochen. Anstelle der gebrochenen C-N-Bindung bildet sich eine C-S-Bindung mit einer angreifenden Schwefelverbindung aus. Gezeigt sind die Grundstrukturen von Hexahydro-1,3,5-Triazin, von Iminen sowie von einem Kondensat aus Aldehyden und Aminen (von links nach rechts).

Teildarstellung 2D zeigt Strukturen von α-halogenierten Carbonylverbindungen, welche befähigt sind, Schwefel und seine Verbindungen im Zuge einer Substitutionsreaktion in die Molekülstruktur einzubauen. Diese substituieren Schwefelverbindungen entstehen unter Abspaltung von Halogenwasserstoffen. Neben der allgemeinen Strukturformel sind zwei jodierte Derivate dargestellt.

Figur 3 zeigt einen möglichen Mechanismus einer S-S-Kettenverlängerung am Beispiel eines 2,5-Dihydrocarbyldithio-1,3,4-dithiazols. Der Schwefel greift eine bestehende S-S- oder S-H- oder S-C-Bindung an. Der Schwefel wird unter S-S-Kettenverlängerung eingebaut und ein 2,5-Dihydrocarbyltrithio-1,3,4-dithiazol wird gebildet.

In Figur 4 ist ein möglicher Mechanismus zur Filmbildung von filmbildenden Inhibitoren 32 am Beispiel von N,N-Bis-alkyl-1 H-tolyltriazol-1-methylamin, einem Tolyltriazolderivat, auf einer Kupferoberfläche gezeigt. Hierbei bilden Stickstoffatome des Triazolrings koordinative Bindungen zum Metall, in diesem Falle Kupfer aus. Der filmbildende Inhibitor zeichnet sich neben den Metall-koordinierenden Stickstoffatomen dadurch aus, dass erweitere Heteroatome und sterisch ungehinderte Wasserstoffatome aufweist. Bei der Koordination an der Metalloberfläche bilden sich dann Wasserstoffbrückenbindungen aus. In der Gesamtheit sind infolgedessen die Metallatome derart blockiert, dass Schwefelatome die entstandenen Bindungen nicht aufbrechen können.

Im Folgenden werden detaillierte Beispiele für erfindungsgemäße Vergussmassen beschrieben.

### Beispiel 1

Es werden 85 Gewichtsteile des Matrixpolymers in Form von Trimethoxysiloxy-terminiertes Polydimethylsiloxan mit einer Viskosität von 700 mPa*s und 13,9 Teile methylterminiertes Polydimethylsiloxan mit einer Viskosität von 300 mPa*s mit einem Teil des schwefelbindenden Inhibitors, nämlich 2,5-Bis(octyldithio)-1,3,4,-thiadiazol und 0,1 Teilen Titan(ethylacetoacetat) zu einer Vergussmasse vermengt. In diesem Ausführungsbeispiel weist keiner der Inhibitoren einen oligomeren oder polymeren Rest R₂ auf.

### Beispiel 2

Es wird 1,3,5-Thiadiazol-2,5-dithiol zunächst durch Oxidation in einem organischen Lösungsmittel mit einem Unterschuss an thiofunktionalisiertem Polysiloxan (z. B. SMS 042 von der Firma Gelest^{®}) zur Reaktion gebracht. Dabei verbinden sich je ein Molekül des Thiazols mit zwei Polysiloxanmolekülen unter Ausbildung einer S-S-Bindung zu einem zweifach durch Polysiloxan substituierten Thiadiazolderivat. Dieses wird dann mit einem Matrixpolymer auf Polysiloxanbasis vermischt.

### Beispiel 3

In diesem Ausführungsbeispiel wird ein Thiadiazol an ein Acryloligomer gebunden und in einer acrylatbasierten Vergussmasse eingesetzt. Alternativ oder zusätzlich kann eine Benztriazol an ein Acrylatoligomer gebunden werden und gemeinsam mit Eisengloconat einem acrylatbasierten Matrixpolymer beigemsicht werden. Das Eisengluconat ist in diesem Beispiel nicht an ein Polymer gebunden.

### Beispiel 4

2,5-Bis(alkyldithio)-1,3,4-thiadiazol-funktionalisiertes Alkyltrimethoxysilan wird zur Funktionalisierung von Polydimethylsiloxanpräpolymeren eingesetzt. Nach einer anschließenden Aushärtung der Polymermischung ist der Korrosionsinhibitor auf Thiadiazolbasis an das Polymernetzwerk des Matrixpolymers gebunden. Alternativ kann ein Thiadiazolderivat im Zuge der Aushärtung an ein epoxidbasiertes Matrixpolymer gebunden werden.

### Beispiel 5

Einem Polysiloxan-Matrixpolymer wird eine Mischung aus vier Inhibitoren beigemischt, nämlich zwei filmbildende Inhibitoren auf Benzotriazolbasis, wobei eine der Verbindungen durch oligomeres Siloxan substituiert ist, sowie einem ebenfalls an das Matrixpolymer gebundenem Thiadiazol und einem ungebundenen Eisen(II)gluconat.

### Bezugszeichenliste

- 10: Vergussmasse

- 20: Matrixpolymer

- 31: schwefelbindender Inhibitor
- 32: filmbildender Inhibitor

- 40: Getriebe
- 50: Getriebesteuerung
- 51: Oberfläche der Getriebesteuerung

- 100: Kraftfahrzeug

## Patentansprüche

1. Vergussmasse zur Beschichtung, Abdichtung und/oder zum Verbinden elektronischer Bauelemente, umfassend ein Matrixpolymer sowie einen Inhibitor, der eine Schwefelkorrosion der Bauelemente durch Schwefel und seine Verbindungen hemmt, wobei der Inhibitor eine organische Verbindung ist, die Schwefel und/oder Schwefelverbindungen durch Einbau in die Molekülstruktur des Inhibitors bindet, und wobei der Inhibitor mindestens eine aus folgender Gruppe ausgewählte Verbindung ist:
- eine Verbindung der allgemeinen chemischen Formel R₁-Sₙ-R₂,
- eine α,β-ungesättigte Carbonylverbindung der allgemeinen chemischen Formel (Rₐ-)(R_{b}-)C=C(-R_{c})-C(=O)(-R_{d}), wobei zumindest einer der Reste R_{a-d} ein Rest R₂ ist,
- eine α-halogenierte Carbonylverbindung der allgemeinen chemischen Formel R₂-C(=O)C(-Rₐ)(-R_{b})-(-X) und/oder
- eine Verbindung der allgemeinen chemischen Formel (R₂-)(R_{c}-)(R_{d}-)C-N(-Rₑ)(-R_{f}),
wobei n eine natürliche Zahl im Bereich von 1 bis 10 ist, X ein Halogen ist und R₁ und R_{a-f} unabhängig voneinander ein Wasserstoffatom, eine kovalente Bindung zu dem Matrixpolymer oder eine lineare oder cyclische, verzweigte oder unverzweigte, aromatische oder aliphatische organische Gruppe umfassend 1 bis 25 Kohlenstoffatome sind und R₂ ein Oligomer mit 3 bis 10 Wiederholeinheiten oder ein Polymer ist, wobei das Oligomer oder Polymer der gleichen Kunststoffklasse wie das Matrixpolymer angehört oder gleiche Wiederholungseinheiten wie dieses aufweist.

2. Vergussmasse nach Anspruch 1, **dadurch gekennzeichnet, dass** der Inhibitor ausgebildet ist, Schwefel und/oder Schwefelverbindungen in die Molekülstruktur des Inhibitors durch Kettenverlängerungsreaktionen, Additionsreaktionen und/oder Substitutionsreaktionen einzubauen.

3. Vergussmasse nach einem der vorhergehenden Ansprüche, **dadurch gekennzeichnet, dass** der Rest R₁ ein substituiertes oder unsubstituiertes Thiadiazol ist.

4. Vergussmasse nach einem der vorhergehenden Ansprüche, **dadurch gekennzeichnet, dass** das Matrixpolymer ein Duromer, ein Elastomer, ein thermoplastisches Elastomer oder eine Mischung von diesen ist.

5. Vergussmasse nach einem der vorhergehenden Ansprüche, **dadurch gekennzeichnet, dass** die Vergussmasse einen oder mehrere weitere schwefelbindende Inhibitoren und/oder filmbildende Inhibitoren umfasst.

6. Elektronisches Bauelement umfassend eine Vergussmasse nach einem der Ansprüche 1 bis 8.

7. Getriebe für ein Kraftfahrzeug, umfassend eine Getriebesteuerung mit einer Oberfläche und eine Vergussmasse nach einem der Ansprüche 1 bis 5, welche auf der Oberfläche der Getriebesteuerung angeordnet ist.

## Claims

1. Potting compound for coating, sealing and/or for joining electronic components, comprising a matrix polymer and an inhibitor which inhibits sulphur corrosion of the components by sulphur and compounds thereof, and the inhibitor is an organic compound which binds sulphur and/or sulphur compounds by incorporation into the molecular structure of the inhibitor, wherein the inhibitor is at least one compound selected from the following group:
- a compound of general chemical formula R₁-Sₙ-R₂,
- an α,β-unsaturated carbonyl compound of general chemical formula (Rₐ-)(R_{b}-)C=C(-R_{c})-C(=O)(-R_{d}), wherein at least one of the radicals R_{a-d} is a radical R₂,
- an α-halogenated carbonyl compound of general chemical formula R₂-C(=O)C(-Rₐ)(-R_{b})-(-X) and/or
- a compound of general chemical formula (R₂-)(R_{c}-)(R_{d}-)C-N(-Rₑ)(-R_{f}),
wherein n is a natural number in the range from 1 to 10, X is a halogen and R₁ and R_{a-f} are independently of one another a hydrogen atom, a covalent bond to the matrix polymer or a linear or cyclic, branched or unbranched, aromatic or aliphatic organic group comprising 1 to 25 carbon atoms and R₂ is an oligomer having 3 to 10 repeating units or a polymer, wherein the oligomer or polymer belongs to the same plastics class as the matrix polymer or comprises the same repeating units as said matrix polymer.

2. Potting compound according to Claim 1, **characterized in that** the inhibitor is configured to incorporate sulphur and/or sulphur compounds into the molecular structure of the inhibitor by chain extending reactions, addition reactions and/or substitution reactions.

3. Potting compound according to either of the preceding claims, **characterized in that** the radical R₁ is a substituted or unsubstituted thiadiazole.

4. Potting compound according any of the preceding claims, **characterized in that** the matrix polymer is a thermoset, an elastomer, a thermoplastic elastomer or a mixture thereof.

5. Potting compound according any of the preceding claims, **characterized in that** the potting compound comprises one or more further sulphur-binding inhibitors and/or film-forming inhibitors.

6. Electronic component comprising a potting compound according to any of Claims 1 to 8.

7. Transmission for a motor vehicle comprising a transmission control means comprising a surface and a potting compound according to any of Claims 1 to 5 which is arranged on the surface of the transmission control means.

## Revendications

1. Masse de scellement pour le revêtement, l'étanchéification et/ou pour la liaison de composants électroniques, comprenant un polymère de matrice et un inhibiteur, qui inhibe une corrosion au soufre des composants par du soufre et ses composés, et l'inhibiteur est un composé organique qui fixe le soufre et/ou les composés de soufre par incorporation dans la structure moléculaire de l'inhibiteur, l'inhibiteur étant au moins un composé choisi dans le groupe suivant :
- un composé de formule chimique générale R₁-Sₙ-R₂,
- un composé de carbonyle α,β-insaturé de formule chimique générale (Rₐ-)(R_{b}-)C=C(-R_{c})-C(=O)(-R_{d}), au moins un des radicaux R_{a-d} étant un radical R₂,
- un composé de carbonyle α-insaturé de formule chimique générale R₂-C(=O)C(-Rₐ)(-R_{b})-(-X) et/ou
- un composé de formule chimique générale (R₂-)(R_{c}-)(R_{d}-)C-N(-Rₑ)(-R_{f}),
n étant un nombre naturel dans la plage allant de 1 à 10, X étant un halogène, et R₁ et R_{a-f} représentant indépendamment les uns des autres un atome d'hydrogène, une liaison covalente au polymère de matrice ou un groupe organique aromatique ou aliphatique, linéaire ou cyclique, ramifié ou non ramifié, comprenant 1 à 25 atomes de carbone, et R₂ représentant un oligomère de 3 à 10 unités de répétition ou un polymère, l'oligomère ou le polymère appartenant à la même classe de plastiques que le polymère de matrice ou comprenant les mêmes unités de répétition que celui-ci.

2. Masse de scellement selon la revendication 1, **caractérisée en ce que** l'inhibiteur est conçu pour incorporer du soufre et/ou des composés de soufre dans la structure moléculaire de l'inhibiteur par des réactions d'allongement de chaîne, des réactions d'addition et/ou des réactions de substitution.

3. Masse de scellement selon l'une quelconque des revendications précédentes, **caractérisée en ce que** le radical R₁ est un thiadiazole substitué ou non substitué.

4. Masse de scellement selon l'une quelconque des revendications précédentes, **caractérisée en ce que** le polymère de matrice est un duromère, un élastomère, un élastomère thermoplastique ou un mélange de ceux-ci.

5. Masse de scellement selon l'une quelconque des revendications précédentes, **caractérisée en ce que** la masse de scellement comprend un ou plusieurs autres inhibiteurs fixant le soufre et/ou inhibiteurs filmogènes.

6. Composant électronique comprenant une masse de scellement selon l'une quelconque des revendications 1 à 8.

7. Engrenage pour un véhicule automobile, comprenant un contrôleur de transmission ayant une surface et une masse de scellement selon l'une quelconque des revendications 1 à 5, qui est agencée sur la surface du contrôleur de transmission.
